# EUROPEAN PATENT APPLICATION

(11) **EP 4 836 388 A1**
(43) Date of publication of application: **04.11.2026**
(21) Application number: 24919723.7
(22) Date of filing: 04.09.2024
(51) Int. Cl.: H04L 67/55

(54) **PUSHED MESSAGE PROCESSING METHOD AND ELECTRONIC DEVICE**

(30) Priority: 26.01.2024 CN 202410121859
(71) Applicant: Huawei Technologies Co., Ltd., Shenzhen, Guangdong 518129 (CN)
(72) Inventor: SHI, Lei, Shenzhen, Guangdong 518129 (CN); XU, Bei, Shenzhen, Guangdong 518129 (CN); LI, Bing, Shenzhen, Guangdong 518129 (CN)
(74) Representative: Huawei European IPR
(86) International application number: PCT/CN2024/116750
(87) International publication number: WO 2025/156642

(57) **Abstract**

A push message processing method and an electronic device are provided. The electronic device includes a main processor and a coprocessor. In the method, the coprocessor receives a push message, and the coprocessor processes the push message; or the coprocessor sends the push message to the main processor, so that the main processor processes the push message. According to embodiments of this application, power consumption of the electronic device by a push service can be reduced, and standby duration of the electronic device can be prolonged.

## Description

The present invention claims priority to Chinese Patent Application No. 202410121859.1, filed with the China National Intellectual Property Administration on January 26, 2024 and entitled "PUSH MESSAGE PROCESSING METHOD AND ELECTRONIC DEVICE", which is incorporated herein by reference in its entirety.

### TECHNICAL FIELD

This application relates to the field of data processing technologies, and in particular, to a push message processing method and an electronic device.

### BACKGROUND

A push (push) service is a service that notifies a user of specified content. Cloud push is used as an example. A cloud server pushes related content to an application on an electronic device by sending a push message, for example, pushes an instant message (IM) to an instant messaging application on the electronic device, or pushes shopping advertisement data to a shopping application on the electronic device.

With continuous derivation of push services in the electronic device, there are more applications providing the push services. Consequently, the electronic device receives more push messages, resulting in increasingly high power consumption of the electronic device by the push service, and affecting standby duration of the electronic device.

### SUMMARY

Embodiments of this application provide a push message processing method and an electronic device, to reduce power consumption of the electronic device by a push service, and prolong standby duration of the electronic device.

According to a first aspect, this application provides a push message processing method, applied to an electronic device, where the electronic device includes a main processor and a coprocessor. The method includes: The coprocessor receives a push message; and the coprocessor processes the push message, or the coprocessor sends the push message to the main processor, so that the main processor processes the push message. In the method, the coprocessor receives the push message, and the coprocessor or the main processor processes the push message, so that the main processor does not need to be woken up each time the push message is received. This reduces a quantity of times that the main processor is woken up, reduces power consumption of the electronic device, and prolongs standby duration of the electronic device.

In some embodiments, the method may further include: The coprocessor determines a target processor from the main processor and the coprocessor based on the push message. The target processor may be only the main processor, or only the coprocessor, or the main processor and the coprocessor. In some embodiments, there may be a plurality of coprocessors. When there are a plurality of coprocessors, a coprocessor that receives the push message may be the same as or different from a coprocessor for processing the push message. For example, when the coprocessor includes a first coprocessor and a second coprocessor, the first coprocessor may receive the push message, and send the push message to the second coprocessor; and the second coprocessor processes the push message. In some embodiments, when the target processor is determined, a priority of the coprocessor may be higher than a priority of the main processor. In other words, when both the coprocessor and the main processor can process the push message, it is determined that the target processor is the coprocessor, so that the main processor does not need to be woken up, thereby reducing power consumption of the electronic device.

In some embodiments, the push message may include a first identifier, and that the coprocessor determines the target processor from the main processor and the coprocessor based on the push message includes: The coprocessor determines the target processor based on the first identifier. The first identifier is set in the push message, so that the coprocessor can quickly and accurately determine the target processor, thereby improving processing efficiency of the coprocessor.

Optionally, the first identifier may indicate an ability related to the push message, and the ability may be a hardware ability or a software running ability. The coprocessor may determine the target processor based on an ability supported by the coprocessor and an ability supported by the main processor. Specifically, the coprocessor may determine, based on the first identifier, the ability related to the push message, and determine the target processor based on the ability related to the push.

Alternatively, the first identifier may indicate the target processor, for example, may be an identifier of the target processor. In this case, the coprocessor may directly determine the target processor based on the first identifier.

In some embodiments, that the coprocessor determines the target processor from the main processor and the coprocessor based on the push message includes: The coprocessor parses the push message to determine the ability related to the push message; and determines the target processor based on the ability related to the push.

Optionally, the ability related to the push message may be a hardware ability. In this case, that the coprocessor parses the push message to determine the ability related to the push message may include: The coprocessor parses the push message to determine hardware related to the push message. Correspondingly, the coprocessor may specifically determine the target processor based on the hardware related to the push message.

In some embodiments, determining the target processor based on the hardware related to the push message may include: determining the target processor based on whether hardware connected to the target processor includes the hardware related to the push message. In this embodiment, determining of the target processor is associated with the hardware connected to the processor, so that it can be ensured that the target processor can process the push message, and a problem that the determined target processor cannot process the push message is avoided. Optionally, when all hardware connected to the coprocessor and the main processor includes the hardware related to the push message, the coprocessor may be preferentially determined as the target processor, so that a quantity of times that the main processor is woken up is reduced, power consumption of the electronic device is reduced, and standby duration of the electronic device is prolonged.

In some embodiments, that the coprocessor parses the push message to determine the ability related to the push message may include: The coprocessor determines the ability related to the push message based on a keyword included in the push message. Through this processing, the coprocessor can accurately obtain the ability related to the push message, and further determine a proper target processor to process the push message.

In some embodiments, a mapping relationship between an ability and a processor may be stored in the coprocessor. Correspondingly, the coprocessor may search the push message for a keyword, and determine, based on the mapping relationship, an ability corresponding to the found keyword, and use the ability as the ability related to the push message. The foregoing mapping relationship is stored in the coprocessor, so that the coprocessor can more quickly determine, based on the keyword, the ability related to the push message.

In some embodiments, the main processor may be an AP, and/or the coprocessor may be an MCU. Because the MCU has lower power consumption than the AP, processing the push message by the MCU has lower power consumption than processing the push message by the AP. Therefore, power consumption of the electronic device is reduced, and standby duration of the electronic device is prolonged.

According to a second aspect, an embodiment of this application provides a push message processing method, applied to an electronic device, where the electronic device includes a main processor and a coprocessor. The method includes: receiving a push message; and sending the push message to the coprocessor, so that the coprocessor processes the push message; or sending the push message to the main processor, so that the main processor processes the push message. In the method, after the push message is received, the push message is preferentially sent to the coprocessor or the main processor for processing, so that the main processor does not need to be woken up each time the push message is received. This reduces a quantity of times that the main processor is woken up, reduces power consumption of the electronic device, and prolongs standby duration of the electronic device.

In some embodiments, the method may further include: determining a target processor from the main processor and the coprocessor based on the push message.

In some embodiments, the push message may include a first identifier, and determining the target processor from the main processor and the coprocessor based on the push message may include: determining the target processor based on the first identifier. The first identifier is set in the push message, so that the coprocessor can quickly and accurately determine the target processor, thereby improving processing efficiency of the coprocessor.

Optionally, the first identifier may indicate an ability related to the push message, and the ability may be a hardware ability or a software running ability. In this case, determining the target processor based on the first identifier may include: determining, based on the first identifier, the ability related to the push message; and determining the target processor based on the ability related to the push.

Alternatively, the first identifier may indicate the target processor, for example, may be an identifier of the target processor. In this case, the target processor may be directly determined based on the first identifier.

In some embodiments, if the first identifier indicates hardware related to the push message, determining, based on the first identifier, the ability related to the push message may include: determining, based on the first identifier, the hardware related to the push message.

In some embodiments, determining the target processor based on the ability related to the push may include: determining the target processor based on whether hardware connected to the target processor includes the hardware related to the push message.

In some embodiments, the main processor may be an AP, and/or the coprocessor may be an MCU. Because the MCU has lower power consumption than the AP, processing the push message by the MCU has lower power consumption than processing the push message by the AP. Therefore, power consumption of the electronic device is reduced, and standby duration of the electronic device is prolonged.

According to a third aspect, an embodiment of this application provides an electronic device, including a main processor, a coprocessor, and a memory. One or more computer programs are stored in the memory, the one or more computer programs include instructions, and when the instructions are executed by the coprocessor, the electronic device is enabled to perform the method according to any one of the first aspect.

According to a fourth aspect, an embodiment of this application provides an electronic device, including a main processor, a coprocessor, a routing processor, and a memory. One or more computer programs are stored in the memory, the one or more computer programs include instructions, and when the instructions are executed by the routing processor, the electronic device is enabled to perform the method according to any one of the second aspect.

According to a fifth aspect, an embodiment of this application provides a computer-readable storage medium. The computer-readable storage medium stores a computer program, and when the computer program is run on a computer, the computer is enabled to perform the method according to any one of the first aspect or the second aspect.

According to a sixth aspect, an embodiment of this application provides a chip system, including a processor. The processor is coupled to a memory, and the processor executes a computer program stored in the memory, to implement the method according to any one of the first aspect or the second aspect. The chip system may be a single chip or a chip module including a plurality of chips.

### BRIEF DESCRIPTION OF DRAWINGS

FIG. 1 is a diagram of a structure of an electronic device according to an embodiment of this application;
FIG. 2 is a diagram of a structure of HarmonyOS according to an embodiment of this application;
FIG. 3 is a schematic flowchart of processing a push service according to an embodiment of this application;
FIG. 4 is a schematic flowchart of a push message processing method according to an embodiment of this application;
FIG. 5 is another schematic flowchart of a push message processing method according to an embodiment of this application;
FIG. 6 is a third schematic flowchart of a push message processing method according to an embodiment of this application;
FIG. 7 is a fourth schematic flowchart of a push message processing method according to an embodiment of this application;
FIG. 8 is a fifth schematic flowchart of a push message processing method according to an embodiment of this application;
FIG. 9 is a sixth schematic flowchart of a push message processing method according to an embodiment of this application;
FIG. 10A and FIG. 10B are a seventh schematic flowchart of a push message processing method according to an embodiment of this application;
FIG. 11 is an eighth schematic flowchart of a push message processing method according to an embodiment of this application; and
FIG. 12 is a ninth schematic flowchart of a push message processing method according to an embodiment of this application.

### DESCRIPTION OF EMBODIMENTS

Terms used in embodiments of this application are only used to explain specific embodiments of this application, but are not intended to limit this application.

Embodiments of this application provide a push message processing method and an electronic device, to reduce power consumption of the electronic device by a push service, and prolong standby duration of the electronic device.

Embodiments of this application are applicable to an electronic device, for example, a mobile phone, a tablet computer (PAD), a personal computer (PC), or a wearable intelligent device like a smartwatch.

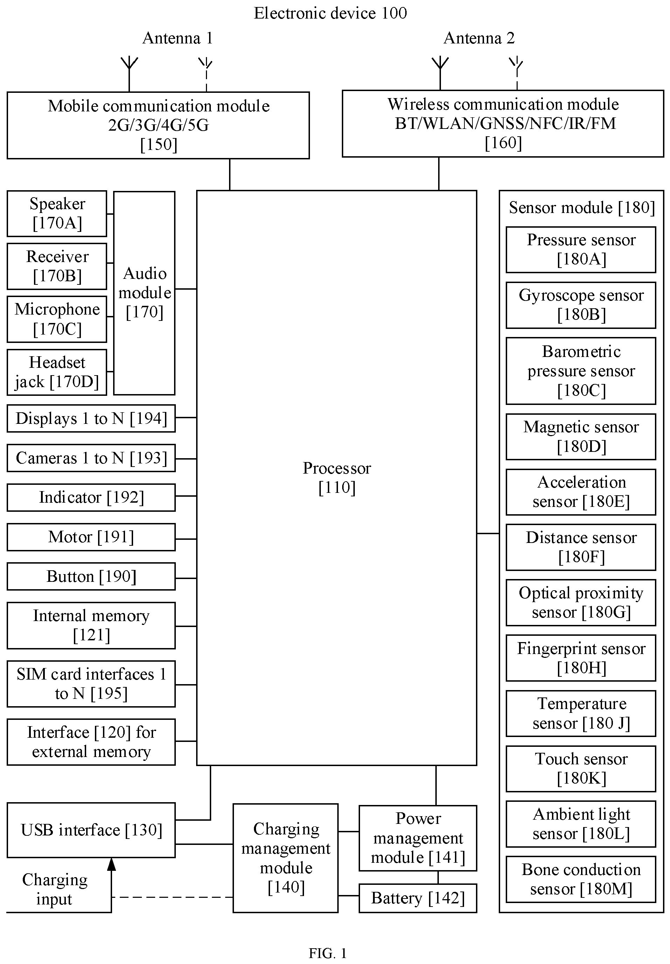

FIG. 1 is a diagram of a structure of an electronic device 100. The electronic device 100 may include a processor 110, an interface 120 for external memory, an internal memory 121, an antenna 1, an antenna 2, a mobile communication module 150, a wireless communication module 160, a display 194, and the like.

Optionally, the electronic device 100 may further include a universal serial bus (universal serial bus, USB) interface 130, a charging management module 140, a power management module 141, a battery 142, the antenna 1, the antenna 2, the mobile communication module 150, an audio module 170, a speaker 170A, a receiver 170B, a microphone 170C, a headset jack 170D, a sensor module 180, a button 190, a motor 191, an indicator 192, a camera 193, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may also be reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives the electromagnetic wave through the antenna 2, performs frequency modulation and filtering processing on the electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite-based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to execute various function applications and data processing of the electronic device 100.

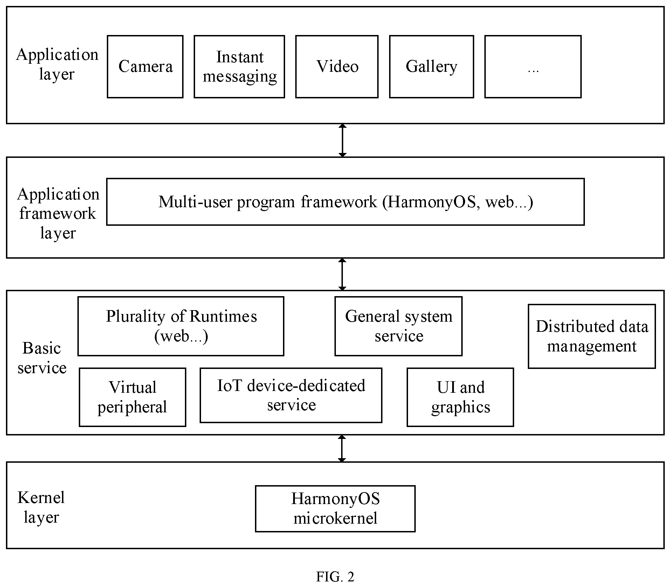

FIG. 2 is a block diagram of a software structure of an electronic device according to an embodiment of this application. In a layered architecture, software is divided into several layers, and each layer has a clear role and task. The layers communicate with each other through a software interface. In embodiments of this application, HarmonyOS is used as an example to describe a software structure of an electronic device in HarmonyOS. In some embodiments, HarmonyOS is divided into four layers: an application layer, an application framework layer, a basic service, and a kernel layer from top to bottom.

The application layer may include several applications (referred to as applications for short below), such as a camera application, a gallery application, a video application, and an instant messaging application. In embodiments of this application, the application layer of the electronic device includes an application A that supports a push service, for example, may be an instant messaging application, a shopping application, a browser application, a video application, or a short video application.

The application framework layer provides an application programming interface (Application Programming Interface, API) and a programming framework for the application at the application layer, and includes various components and abilities to support HarmonyOS development of developers. An ability (ability) represents an atomic basic ability in HarmonyOS, and may correspond to a service (Service) or a content provider (ContentProvider) in Android^{®} (Android), and a service uniform resource identifier (uniform resource identifier, URI) exposed externally in iOS^{®}, for example, ring tone playing, Bluetooth, Wi-Fi, or battery management. Regardless of Android, iOS, or HarmonyOS, when an application is packaged, a set of abilities used by the application is declared, so that the system initializes corresponding resources.

The basic service is a set of core abilities of HarmonyOS and provides services for applications through the framework layer.

The kernel layer is a layer between hardware and software. The kernel layer may include a display driver, a camera driver, an audio driver, a sensor driver, and the like.

In the following embodiments, a push message processing method in embodiments of this application is described in detail with reference to the structure of the electronic device.

First, a push service processing procedure to which the push message processing method in embodiments of this application is applicable is described by using an example.

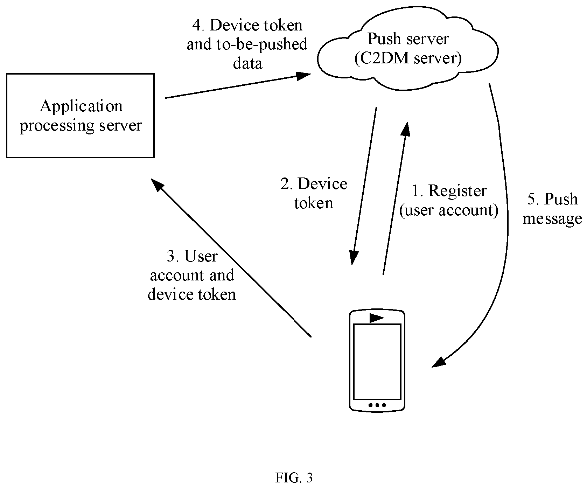

As shown in FIG. 3, a user installs an application A on an electronic device, and the electronic device sends a user account of the application A to a push server via the application A, to register a push service. After completing registration based on the user account, the push server allocates a device token (device token) to the user, and sends the device token to the application A on the electronic device. The application A on the electronic device sends the user account and the device token to an application processing server corresponding to the application A, and the application processing server stores the user account and the corresponding device token. When there is data that needs to be pushed to the user, the application processing server sends the to-be-pushed data and the device token to the push server, and the push server sends the to-be-pushed data to the application A on the electronic device through a push message based on the device token.

In some embodiments, the application processing server may separately implement service processing and push message delivery via a service processing server and a push message delivery server. In this case, when the push message delivery server needs to deliver a push message, the push message delivery server may send the user account and the to-be-pushed data to the service processing server, and the service processing server finds the corresponding device token based on the user account, and sends the device token and the to-be-pushed data to the push server. The push message is also referred to as a push notification (push notification) in some related technologies.

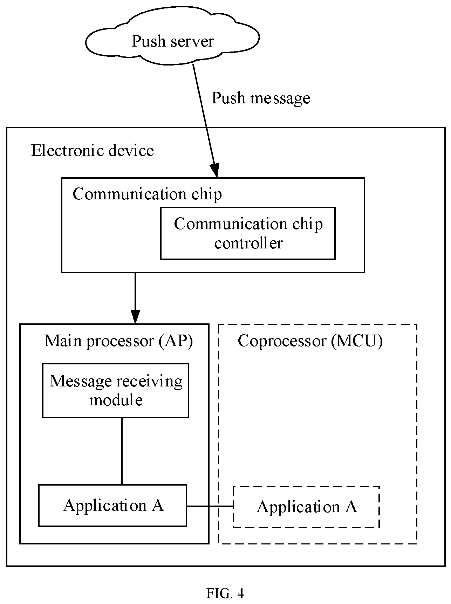

In some embodiments, when receiving a push message, a communication chip in an electronic device sends the push message to a message receiving module in an AP, and the message receiving module in the AP sends the push message to an application corresponding to the push message for processing. For example, as shown in FIG. 4, it is assumed that the push message belongs to an application A. The message receiving module sends the push message to the application A in the AP, and the application A in the AP performs processing such as push message parsing, push content obtaining, and related UI drawing on the push message.

In some embodiments, as shown in FIG. 4, the AP in the electronic device may be used as a main processor, and a coprocessor may be disposed outside the main processor. In embodiments of this application, an example in which the coprocessor is a microcontroller unit (microcontroller unit, MCU) is used. The application A may be separately set in the AP and the MCU, and intra-application communication and collaboration may be performed between the applications A in the two processors, to implement a function of the application A. As shown in FIG. 4, the message receiving module in the AP can only communicate with the application A set in the AP, and cannot communicate with the application A in the MCU.

To reduce power consumption, when no task is running, the AP of the electronic device enters a sleep state. For example, when the electronic device is screen-off and there is no interrupt source activity, the AP automatically enters the sleep state. If the communication chip of the mobile phone receives the push message, the AP of the electronic device is woken up, and the AP of the electronic device is powered on. The communication chip sends the push message to the message receiving module in the AP. The message receiving module in the AP and a corresponding application process the push message. When there are a large quantity of push messages, the AP of the mobile phone is frequently woken up, resulting in high power consumption of the electronic device in processing the push messages. An example of a wearable electronic device like a smartwatch is used. Power consumption of the smartwatch in processing a push message accounts for more than 40% of standby power consumption of the entire system.

To resolve power consumption of the electronic device in processing the push message, embodiments of this application provide a solution for processing the push message on a plurality of processors of a mobile phone.

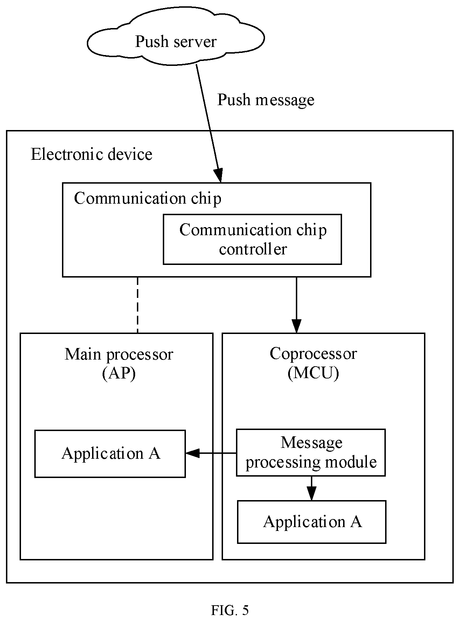

The electronic device in embodiments of this application may include a main processor and at least one coprocessor. Optionally, the main processor may be a processor that can provide more resources and computational power but has higher power consumption, for example, an AP. The coprocessor may be a processor that provides fewer resources and computational power but has lower power consumption, for example, an MCU. For example, in the electronic device shown in FIG. 5, the electronic device includes a main processor and one coprocessor, and an example in which the main processor is the AP and the coprocessor is the MCU is used.

In the push message processing method provided in embodiments of this application, when receiving a push message, a communication chip in the electronic device sends the push message to the coprocessor. After receiving the push message, the coprocessor processes the push message or sends the push message to the main processor, so that the main processor processes the push message. Therefore, in embodiments of this application, a part of the received push message is processed by the coprocessor, and a part of the received push message is processed by the main processor, so that a quantity of times that the main processor is woken up is reduced, in comparison with the foregoing embodiment in which the main processor is directly woken up to process the push message, thereby reducing power consumption of the electronic device in processing the push message, and prolonging standby duration of the electronic device.

In some embodiments, after receiving the push message, the coprocessor may first determine, from the coprocessor and the main processor, a target processor for processing the push message. When the target processor is the coprocessor, the coprocessor processes the push message. When the target processor is the main processor, the coprocessor sends the push message to the main processor for processing.

To improve rationality and accuracy of determining the target processor by the coprocessor, in embodiments of this application, when the coprocessor determines the target processor, determining may be performed based on a matching status between an ability related to the push message and an ability of the processor (the main processor or the coprocessor). The following provides descriptions by using an example.

In embodiments of this application, a specific quantity of abilities (ability) may be deployed in the main processor and a specific quantity of abilities (ability) may be deployed in the coprocessor.

In some embodiments, the ability of the processor (the main processor or the coprocessor) may be hardware mounted on the processor. For ease of description, the ability is also referred to as a hardware ability for short below. Assuming that a piece of hardware is mounted on the processor, the processor has an ability corresponding to the hardware. In other words, the processor supports the ability corresponding to the hardware. The hardware may be hardware other than the processor in the electronic device, for example, the camera, the speaker, the display, and/or various sensors listed in FIG. 1. For example, if a camera is mounted on the AP, the AP has a "camera" ability. Similarly, if a camera is mounted on the MCU, the MCU has a "camera" ability. In some embodiments, that the hardware is mounted on the processor may also be referred to as that the processor is connected to the hardware.

Optionally, that the hardware is mounted on the processor generally means that the processor is connected to the hardware, and has a driver of the hardware installed, so that the processor can drive the hardware to operate normally. For example, if the camera is mounted on the AP, the AP is connected to the camera, and has a camera driver installed, to drive the camera to operate normally.

In some other embodiments, the ability of the processor may be a software running ability related to the hardware mounted on the processor. For ease of description, the ability is also referred to as a software running ability for short below. Assuming that one piece of hardware is mounted on the processor, the processor has at least one software running ability related to the hardware. For example, if a camera is mounted on the AP, the AP may have a video shooting ability related to the camera. If a display is mounted on the AP, the AP may have a text display ability, a badge display ability, or the like related to the display.

In embodiments of this application, specific pieces of hardware mounted on the main processor, specific pieces of hardware mounted on the coprocessor, a quantity of pieces of hardware mounted on the main processor, and a quantity of pieces of hardware mounted on the coprocessor, and the like are not limited, and independent setting may be performed in actual application. In some embodiments, hardware mounted on each processor may be deployed based on different resources, computational power, or the like corresponding to different processors. For example, an ability with a high requirement on the resource and the computational power may be mounted on the main processor; and an ability with a low requirement on the resource and the computational power may be mounted on the coprocessor, or may be mounted on both the main processor and the coprocessor. For example, for an ability, for example, the camera, with a high requirement on the resource and the computational power the ability may be mounted on the AP. For an ability, for example, the display, the speaker, or the various sensors, with a low requirement on the resource and the computational power, the ability may be mounted on only the MCU, or may be mounted on both the AP and the MCU. Through the foregoing deployment of mounting the hardware on the processor, resources and computational power of the main processor and the coprocessor can be better used, thereby improving efficiency of the electronic device in processing the push message.

In embodiments of this application, a set of abilities of the main processor is referred to as an ability set 1, and a set of abilities of the coprocessor is referred to as an ability set 2. Optionally, there may be an intersection set between the ability set 1 and the ability set 2, or there may be no intersection set between the ability set 1 and the ability set 2. In some embodiments, the ability set 2 is a subset of the ability set 1.

In an embodiment of the push message processing method provided in this application, the main processor and the coprocessor do not collaboratively process the push message. Specifically, if the coprocessor has all abilities declared to be used for the push message, regardless of whether the main processor has all the abilities declared to be used for the push message, the coprocessor preferentially invokes the abilities declared to be used for the push message, to process the push message. If the coprocessor does not have all the abilities declared to be used for the push message, the main processor invokes the abilities declared to be used for the push message, to process the push message.

With reference to FIG. 5, an example in which the main processor is the AP and the coprocessor is the MCU is used. If the push message declares to use a "display" ability and a "camera" ability, and the MCU has the "display" ability and the "camera" ability, the MCU uses the "display" ability and the "camera" ability to process the push message. Otherwise, if the MCU has only the "display" ability or only the "camera" ability or neither of the two abilities, the AP uses the "display" ability and the "camera" ability to process the push message.

Optionally, in some embodiments, to ensure that when the coprocessor does not have all abilities declared to be used for a specific push message, the main processor can have all the abilities declared to be used for the push message so that the electronic device can normally process the push message, the ability set 1 of the main processor may be a set of all the abilities that may be declared to be used for the push message and that are in the electronic device, and the ability set 2 of the coprocessor may be a subset of the ability set 1 of the main processor.

In embodiments of this application, the coprocessor preferentially processes the push message, and the main processor processes the push message only when the coprocessor does not have all the abilities declared to be used for the push message, so that a quantity of times that the main processor is woken up can be reduced, and power consumption of the electronic device can be reduced.

In some embodiments, routing of the push message may be specifically performed by the coprocessor. After receiving the push message, the communication chip of the electronic device may send a wake-up signal to the coprocessor (for example, the MCU), and the coprocessor is woken up from a sleep state by the wake-up signal. The communication chip sends the push message to the coprocessor, and the coprocessor routes the push message to the coprocessor or the main processor for processing.

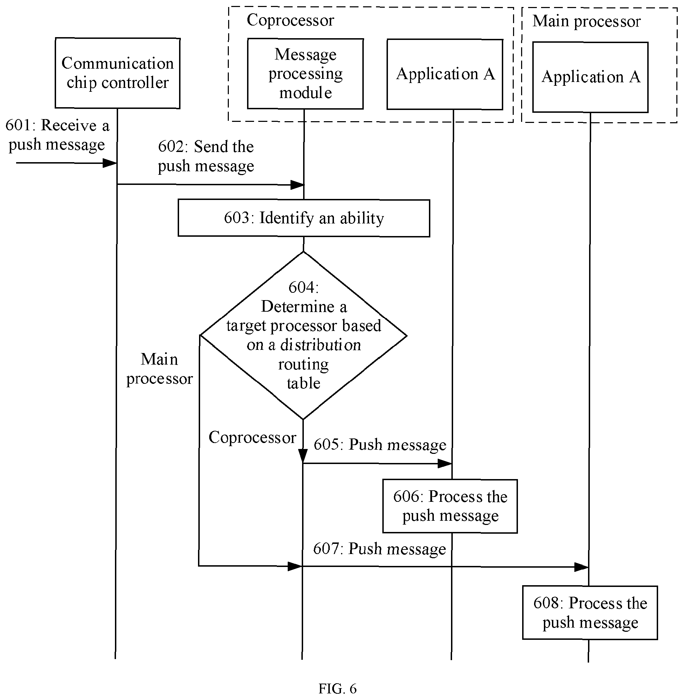

With reference to FIG. 5 and FIG. 6, the following describes implementations of the push message processing method in embodiments of this application by using examples.

As shown in FIG. 5, the electronic device may include a communication chip, a main processor (for example, an AP), and a coprocessor (for example, an MCU).

The communication chip may be a communication chip that supports any wireless communication manner. The communication chip includes a communication chip controller, configured to perform wireless communication with another device according to a communication protocol supported by the communication chip. In embodiments of this application, the communication chip may be connected to a network, and receive a push message sent by a push server to the electronic device.

When an application A (for example, an instant messaging application) that supports a push service is installed on the electronic device, the application A may be separately installed in the main processor and the coprocessor. Each of the application A in the main processor and the application A in the coprocessor has a push message processing function. In other words, each of the application A in the main processor and the application A in the coprocessor can process a push message of the application A.

It may be understood that the application A in the main processor and the application A in the coprocessor may further have other functions different from the push message processing function. This is not specifically limited in embodiments of this application. For example, the application A is a shopping application. In addition to the push message processing function, the application A in the main processor and the application A in the coprocessor may also have functions such as a commodity search function, a commodity display function, and a commodity purchase function.

Functions of the application A in the main processor and functions of the application A in the coprocessor may be the same or may be different. In some embodiments, the functions of the application A in the coprocessor may be a subset of the functions of the hardware A in the main processor. For example, the application A in the main processor may have all functions that the application A can provide, such as the push message processing function, the commodity search function, the commodity display function, and the commodity purchase function. The application A in the coprocessor may have all or a part of the foregoing functions, provided that all or the part of the foregoing functions include the push message processing function.

To support routing of the push message, a message processing module may be disposed in the coprocessor. The message processing module may be a module provided by an operating system. In some embodiments, the message processing module may be specifically an application provided by the operating system, and the application may be an application different from the application A.

The message processing module is configured to: parse a received push message, identify an ability declared to be used for the push message, and route the push message to the application A in the coprocessor or the application A in the main processor based on the ability declared to be used for the push message.

FIG. 6 is a schematic flowchart of a push message processing method according to an embodiment of this application based on the structure of the electronic device shown in FIG. 5. As shown in FIG. 6, the method may include the following steps.

Step 601: A communication chip controller receives a push message.

Step 602: The communication chip controller sends the push message to a message processing module of a coprocessor.

Optionally, before the communication chip controller sends the push message to the message processing module of the coprocessor, a communication chip may send a wake-up signal to the coprocessor. If the coprocessor is in a sleep state, the coprocessor is woken up. Then, the message processing module of the coprocessor may receive the push message sent by the communication chip controller.

Step 603: The message processing module identifies an ability (ability) declared to be used for the push message, to obtain an ability list of the push message.

For a specific implementation of this step, refer to corresponding descriptions in subsequent embodiments. Details are not described herein.

Step 604: The message processing module determines, based on the ability list of the push message and a distribution routing table, a target processor for processing the push message. If the target processor is the coprocessor, step 605 is performed; otherwise, step 607 is performed.

Optionally, the message processing module may find, from the distribution routing table, a processor corresponding to each ability in the ability list. When the processor corresponding to each ability includes the coprocessor, it is determined that the target processor is the coprocessor; otherwise, it is determined that the target processor is a main processor. For a specific implementation of this step, refer to corresponding descriptions in subsequent embodiments. Details are not described herein.

Step 605: The message processing module sends the push message to an application A in the coprocessor, to perform step 606.

Step 606: The application A in the coprocessor processes the push message by using the ability declared in the push message. This branch procedure ends.

Step 607: The message processing module sends the push message to the application A in the coprocessor, to perform step 608.

Optionally, to prevent the main processor from being in a sleep state and failing to receive the push message, before this step is performed, the coprocessor may send a wake-up signal to the main processor. If the main processor is in the sleep state, the main processor is woken up by the wake-up signal. Then, the application A in the main processor may receive the push message sent by the message processing module in the coprocessor.

Step 608: The application A in the main processor processes the push message by using the ability declared in the push message. This branch procedure ends.

In this method, after the communication chip receives the push message, the message processing module of the coprocessor parses and routes the push message. When the coprocessor has all abilities declared to be used for the push message, the application A in the coprocessor may directly use the abilities of the coprocessor to process the push message. In the entire process, only the coprocessor needs to be woken up, and the push message can be processed without waking up the main processor. This can avoid frequent waking up of the main processor and reduce power consumption of the electronic device.

The following describes, by using an example, a possible implementation in which the message processing module identifies the ability declared to be used for the push message in the foregoing embodiment.

Code of the push message declares that processing of the push message by the application exists, and the processing is identified by using a fixed character string. For example, the code of the push message is as follows:

```
         {
          "aps" : {
          "alert" : "message"//Message
          "badge" : 9//Display 9 badges
          "sound" : "default"//Vibration prompt tone. The default value is default
          },
          "parm1" : "bar"//Extended parameter 1
          "parm2" : 2 //Extended parameter 2
         }
```

Alternatively, a push message of a voice call in an instant messaging application is shown as follows:

```
{
          "aps" : {
          "alert" : "message",//Message (text display)
          "badge" : 9,//Display 9 badges
      "sound" : "default" //Vibration prompt tone. The default value is default (audio playing)
          },
         "voicecall":"123456789" (incoming voice call from 123456789)
         }
```

The push message includes character strings such as "alert", "badge", and "sound", which respectively indicate processing that needs to be performed by the application A on the push message. In this embodiment of this application, the ability declared to be used for the push message may be identified based on the foregoing keywords.

In some embodiments, a keyword corresponding to each ability may be preset, and the push message is searched for whether there is a keyword corresponding to an ability, to identify the ability declared to be used for the push message. Specifically, the push message may be sequentially searched for the keyword corresponding to each ability. When a keyword corresponding to an ability exists, it is identified that the push message declares to use the ability.

In some embodiments, if the ability declared to be used for the push message is hardware mounted on the processor, the message processing module may prestore a mapping relationship between each ability and the keyword. The mapping relationship is shown in Table 1.

**Table 1**

| Ability | Keyword |
|---|---|
| Speaker | sound |
| Display | alert, badge |
| Camera | camera |
| ... | ... |

In this case, the message processing module may sequentially search the push message for whether there are keywords such as sound, alert, badge, and camera. Because the keywords sound, alert, and badge may be found in the push message, it may be identified that abilities declared to be used for the push message include the speaker and the display, and it may be obtained that an ability list of the push message includes the speaker and the display.

In some embodiments, if the ability declared to be used for the push message is a software running ability related to hardware mounted on the processor, a mapping relationship that is between each ability and the keyword and that is prestored in the message processing module is shown in Table 2.

**Table 2**

| Ability | Keyword |
|---|---|
| Sound playing ability | sound |
| Text display ability | alert |
| Badge display ability | badge |
| ... | ... |

In this case, the message processing module may sequentially search the push message for whether there are keywords such as sound, alert, and badge. Because the keywords sound, alert, and badge may be found in the push message, it can be identified that abilities declared to be used for the push message may include the sound playing ability, the text display ability, and the badge display ability, and it may be obtained that an ability list of the push message includes the sound playing ability, the text display ability, and the badge display ability.

The following describes an example of an implementation in which the message processing module determines, based on the distribution routing table, the target processor for processing the push message in the foregoing embodiment.

Optionally, the message processing module may generate the distribution routing table of the push message based on abilities of the main processor and the coprocessor. Specifically, the distribution routing table may record, for each ability, information about a processor having the ability. Optionally, the distribution routing table may include an ability field and a processor field, and a processor field corresponding to each ability field records a processor having the ability.

In some embodiments, when the processor (including the main processor and the coprocessor) in the electronic device is started, the processor may obtain hardware mounted on the processor, so as to obtain an ability of the processor. The message processing module may obtain, from each processor, an ability of the processor, and generate the distribution routing table based on the ability of each processor.

Optionally, if the message processing module identifies that a type of an ability declared to be used for the push message is the same as a type of an ability recorded in the distribution routing table, for example, both are hardware abilities or both are software running abilities, when the message processing module determines, based on the distribution routing table, the target processor for processing the push message, the distribution routing table may be searched for, based on the ability list of the push message, a processor corresponding to each ability (that is, each ability declared to be used for the push message) in the ability list. When the processor corresponding to each ability in the ability list includes the coprocessor, it is determined that the target processor of the push message is the coprocessor; otherwise, it is determined that the target processor is the main processor.

The following uses examples for description.

In some embodiments, if an ability of the processor is hardware mounted on the processor, the distribution routing table is, for example, shown in the following Table 3.

**Table 3**

| Ability | Processor |
|---|---|
| Display | AP, MCU |
| Speaker | AP, MCU |
| Touchscreen | AP, MCU |
| Barometer | MCU |
| Camera | AP |
| Acceleration sensor | MCU |

Table 3 includes an ability field and a processor field. A processor field corresponding to each ability field records a processor having the ability. For example, in Table 3, an example in which the main processor is an AP and the coprocessor is an MCU is used. Processors having a "display" ability, a "speaker" ability, and a "touchscreen" ability are respectively the AP and the MCU, a processor having a "barometer" ability and an "acceleration sensor" is the MCU, and a processor having a "camera" ability is the AP.

In this embodiment, when the message processing module determines, based on the distribution routing table, the target processor for processing the push message:
If the ability list of the push message includes the speaker and the display, it may be found from Table 3 that processors corresponding to the "speaker" ability are the AP and the MCU, and processors corresponding to the "display" ability are also the AP and the MCU. Both the processors corresponding to the two abilities include the MCU. In this case, it is determined that the target processor of the push message is the MCU.

If the ability list of the push message includes the display and the camera, it may be found from Table 3 that processors corresponding to the "display" ability are the AP and the MCU, and a processor corresponding to the "camera" ability is the AP. A processor corresponding to only one ability includes the MCU. In this case, it is determined that the target processor of the push message is the AP.

Other possible implementations are not listed one by one in embodiments of this application.

In some other embodiments, if the ability of the processor is a software running ability related to hardware mounted on the processor, the distribution routing table is, for example, shown in Table 4.

**Table 4**

| Ability | Processor |
|---|---|
| Text display ability | AP, MCU |
| Audio playing ability | AP, MCU |
| Badge display ability | AP, MCU |
| Video playing ability | AP |
| ... | ... |

Table 4 includes an ability field and a processor field. A processor field corresponding to each ability field records a processor having the ability. For example, in Table 4, an example in which the main processor is an AP and the coprocessor is an MCU is used. Processors having the text display ability, the audio playing ability, and the badge display ability are the AP and the MCU, and a processor having the video playing ability is the AP.

In this embodiment, when the message processing module determines, based on the distribution routing table, the target processor for processing the push message:

If the ability list of the push message includes the text display ability and the audio playing ability, it may be found from Table 4 that processors corresponding to the text display ability and processors corresponding to the audio playing ability are the AP and the MCU. The processors corresponding to the two abilities both include the MCU. Therefore, it is determined that the target processor for processing the push message is the MCU.

If the ability list of the push message includes the text display ability and the video playing ability, it may be found from Table 4 that processors corresponding to the text display ability are the AP and the MCU, and a processor corresponding to the video playing ability is the AP. A processor corresponding to only one ability includes the MCU. Therefore, it is determined that the target processor for processing the push message is the AP.

Other possible implementations are not listed one by one in embodiments of this application.

Optionally, if the message processing module identifies that the ability declared to be used for the push message is the software running ability, and the ability recorded in the distribution routing table is the hardware ability, in other words, types of the two abilities do not match, before the message processing module determines, based on the distribution routing table, the target processor for processing the push message, the software running ability declared to be used for the push message may be first converted into a hardware ability, and then the distribution routing table is searched for, based on the hardware ability obtained through conversion, a processor corresponding to each ability (that is, each ability declared to be used for the push message) in the ability list. When a processor corresponding to each ability in the ability list includes the coprocessor, it is determined that the target processor of the push message is the coprocessor; otherwise, it is determined that the target processor is the main processor.

The following uses examples for description.

An ability type conversion table may be preset in the message processing module. For example, as shown in Table 5, the ability type conversion table includes a hardware ability field and a software running ability field, and a hardware ability field corresponding to the software running ability field records a hardware ability corresponding to the software running ability.

**Table 5**

| Software running ability | Hardware ability |
|---|---|
| Text ability | Display |
| Badge display ability | Display |
| Audio playing ability | Speaker |
| Video playing ability | Camera |
| ... | ... |

If the message processing module identifies, based on the preset relationship shown in Table 2, that the ability declared to be used for the push message is the software running ability, and the ability recorded in the preset distribution routing table in the message processing module is the hardware ability, as shown in Table 3, before determining, based on, for example, the distribution routing table shown in Table 3, the target processor for processing the push message, the message processing module may first convert, based on the ability type conversion table shown in Table 5, the ability declared to be used for the push message from the software running ability to the hardware ability.

For example, if the abilities declared to be used for the push message include the text display ability and the audio playing ability, the message processing module may convert the text display ability into the "display" ability and convert the audio playing ability into the "speaker" ability based on Table 5. The following is not listed one by one.

With reference to the structure of the electronic device shown in FIG. 5, in another embodiment of the push message processing method provided in this application, the main processor and the coprocessor may collaboratively process the push message. Specifically,
if the coprocessor has all abilities declared to be used for the push message, the coprocessor preferentially invokes the ability declared to be used for the push message to process the message. If the coprocessor has only some abilities declared to be used for the push message, the coprocessor invokes the some abilities to process the push message, and the main processor invokes other abilities declared to be used for the push message to process the push message; or if the coprocessor does not have any ability declared to be used for the push message, the main processor invokes the ability declared to be used for the push message to process the push message.

An example in which the main processor is the AP and the coprocessor is the MCU is still used. If the push message declares that the text display ability and the audio playing ability are used, and the MCU has the text display ability and the audio playing ability, the MCU invokes the text display ability and the audio playing ability to process the push message. If the MCU has only the text display ability, the MCU invokes the text display ability to process the push message, and the AP invokes the audio playing ability to process the push message. If the MCU does not have the text display ability or the audio playing ability, the AP invokes the text display ability and the audio playing ability to process the push message.

Optionally, in some embodiments, to ensure that the main processor and the coprocessor can collaboratively process all push messages, a union set of an ability set 1 of the main processor and an ability set 2 of the coprocessor may be a set of all abilities declared to be used for the push messages in the electronic device. There may be an intersection set between the ability set 2 of the coprocessor and the ability set 1 of the main processor, or there may be no intersection set between the ability set 2 of the coprocessor and the ability set 1 of the main processor.

In this embodiment, the coprocessor preferentially processes the push message, and the main processor and the coprocessor collaboratively process the push message or separately process the push message only when the coprocessor does not have all abilities declared to be used for the push message, so that a quantity of times that the main processor is woken up can be reduced, and power consumption of the electronic device can be reduced.

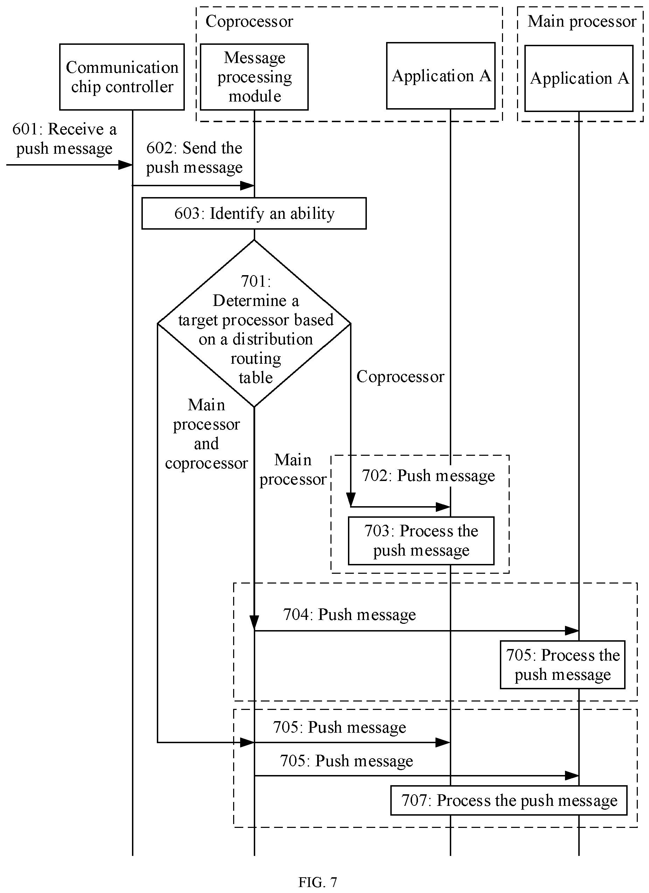

The following describes an example of an implementation of the push message processing method in this embodiment of this application by using FIG. 5 and FIG. 7.

A difference between the message processing module in this embodiment and the message processing module in the previous embodiment mainly lies in the following: In the previous embodiment, the message processing module routes the push message to the application A in the main processor or the application A in the coprocessor for processing, while in this embodiment, the message processing module routes the push message to the application A in the main processor and/or the application A in the coprocessor for processing.

FIG. 7 is a schematic flowchart of a push message processing method according to an embodiment of this application based on the structure of the electronic device shown in FIG. 5. As shown in FIG. 7, a difference between the method and the method shown in FIG. 6 mainly lies in that steps 604 to 608 are replaced with the following steps 701 to 707.

Step 701: A message processing module determines, based on an ability list of a push message and a distribution routing table, a target processor for processing the push message. When the target processor is a coprocessor, step 702 is performed; when the target processor is a main processor, step 704 is performed; or when the target processor is a main processor and a coprocessor, step 706 is performed.

Optionally, the message processing module may find, from the distribution routing table, a processor corresponding to each ability in the ability list. When the processor corresponding to each ability includes the coprocessor, it is determined that the target processor is the coprocessor; when the processor corresponding to each ability does not include the coprocessor, it is determined that the target processor is the main processor; and when processors corresponding to some abilities include the coprocessor, it is determined that the target processor is the main processor and the coprocessor.

Step 702: The message processing module sends the push message to an application A in the coprocessor, to perform step 703.

Step 703: The application A in the coprocessor processes the push message by using an ability declared in the push message. This branch procedure ends.

Step 704: The message processing module sends the push message to an application A in the main processor, to perform step 705.

Optionally, to prevent the main processor from being in a sleep state and failing to receive the push message, before this step is performed, the coprocessor may send a wake-up signal to the main processor. If the main processor is in the sleep state, the main processor is woken up by the wake-up signal. Then, the application A in the main processor may receive the push message sent by the message processing module in the coprocessor.

Step 705: The application A in the main processor processes the push message by using the ability declared in the push message. This branch procedure ends.

Step 706: The message processing module sends the push message to the application A in the main processor and the application A in the coprocessor, to perform step 707.

Step 707: The application A in the coprocessor processes the push message by using an ability that is supported by the coprocessor and that is in the ability declared to be used for the push message, and the application A in the main processor processes the push message by using an ability that is not supported by the coprocessor and that is in the ability declared to be used for the push message. This branch procedure ends.

Optionally, in this step, the application A in the coprocessor may determine, by using a method similar to that of the message processing module, the ability declared to be used for the push message and the ability supported by the coprocessor, so as to process the push message by using a corresponding ability. The application A in the main processor may determine, by using a method similar to that of the message processing module, the ability declared to be used for the push message and the ability supported by the coprocessor in the ability declared to be used for the push message, to obtain the ability that is not supported by the coprocessor and that is in the ability declared to be used for the push message, so as to process the push message by using a corresponding ability.

In some other embodiments provided in this application, to save processing resources and improve processing efficiency, in the foregoing embodiment, when determining that the target processor is the main processor and the coprocessor, the message processing module may divide, based on the processor corresponding to each ability found from the distribution routing table, the ability list of the push message into an ability sublist 1 and an ability sublist 2. The ability sublist 1 records the ability that is supported by the coprocessor and that is in the ability declared to be used for the push message, and the ability sublist 2 records the ability that is not supported by the coprocessor and that is in the ability declared to be used for the push message. For example, if the push message declares that a text display ability and a video playing ability are used, an MCU has only the text display ability and does not have the video playing ability, and the AP has the video playing ability. In this case, the ability sublist 1 may include the text display ability, and the ability sublist 2 may include the video playing ability. In step 706, when sending the push message to the application A in the main processor, the message processing module may simultaneously send the ability sublist 2; and when sending the push message to the application A in the coprocessor, the message processing module may simultaneously send the ability sublist 1. Therefore, in step 707, the application A in the main processor and the application A in the coprocessor do not need to determine, from the push message, an ability that needs to be used by the application A in the main processor and an ability that needs to be used by the application A in the coprocessor, thereby improving efficiency of processing the push message by the two applications A.

It may be understood that a union set of the ability sublist 1 and the ability sublist 2 is the ability list, and the ability sublist 2 is a part of the ability list other than the ability sublist 1.

In some other embodiments provided in this application, when determining that the target processor is the main processor and the coprocessor, the message processing module may not send the ability sublist 1 and the ability sublist 2. Instead, the push message is split into a push message 1 and a push message 2 based on abilities respectively used by the main processor and the coprocessor to process the push message. The push message 1 is partial message content, in the push message, corresponding to the ability supported by the coprocessor; and the push message 2 is partial message content, in the push message, corresponding to the ability that is not supported by the coprocessor but supported by the main processor. Therefore, in step 706, the message processing module may send the push message 1 to the application A in the coprocessor, and send the push message 2 to the application A in the main processor. Correspondingly, in step 707, the application A in the coprocessor processes the push message 1, and the application B in the main processor processes the push message 2.

The following push message is used as an example:

```
         {
          "aps" : {
          "alert" : "message"
          "badge" : 9
          "sound" : "default"
          },
          "parm1" : "bar"
          "parm2" : 2
         }
```

It is assumed that the coprocessor supports only a "speaker" ability, and the main processor supports a "display" ability. In this case, the push message may be split into the following push message 1 and push message 2.

The push message 1 is:

```
         {
          "aps" : {
          "sound" : "default"
          },
          "parm1" : "bar"
          "parm2" : 2
```

The push message 2 is:

```
         {
          "aps" : {
          "alert" : "message"
          "badge" : 9
          },
          "parm1" : "bar"
          "parm2" : 2
```

In some other embodiments provided in this application, when determining that the target processor is the main processor and the coprocessor, the message processing module may not split the push message or the ability list. Instead, before the push message is sent to the main processor and the coprocessor in step 706, the push message is marked based on the abilities respectively used by the main processor and the coprocessor to process the push message, so that in step 707, the main processor and the coprocessor may determine, based on the mark, the abilities that need to be used by the main processor and the coprocessor for the push message, and further process the push message.

In an example, the message processing module may use different marks in a same push message to indicate partial message content that needs to be processed by the main processor and partial message content that needs to be processed by the coprocessor.

The following push message is used as an example:

```
         {
          "aps" : {
          "alert" : "message"
          "badge" : 9
          "sound" : "default"
          },
          "parm1" : "bar"
          "parm2" : 2
         }
```

It is assumed that the coprocessor supports only the "speaker" ability, and the main processor supports the "display" ability. In this case, partial message content corresponding to the "speaker" ability in the push message may be indicated by using a mark 1, and partial message content corresponding to the "display" ability in the push message may be indicated by using a mark 2. The following is an example of a marked push message:

```
         {
          "aps" : {
          "alert" : "message" //Δ
          "badge" : 9 //Δ
          "sound" : "default" //√
          },
          "parm1" : "bar"
          "parm2" : 2
         }
```

√ indicates the mark 1, Δ indicates the mark 2, and an unmarked part may indicate that the two processors perform processing.

It should be noted that the foregoing marks Δ and √ are merely examples, and how the mark 1 and the mark 2 are specifically implemented is not limited in embodiments of this application.

In another example, the message processing module may use a mark a in the push message sent to the main processor to indicate the partial message content that needs to be processed by the main processor, and use a mark b in the push message sent to the coprocessor to indicate the partial message content that needs to be processed by the coprocessor. The mark a and the mark b may be a same mark or different marks. This is not limited in embodiments of this application.

Continuing with the foregoing example of the push message, the push message sent to the main processor is, for example, as follows:

```
         {
          "aps" : {//Δ
          "alert" : "message" //Δ
          "badge" : 9 //Δ
          "sound" : "default"
          }
          "parm1" : "bar"//Δ
          "parm2" : 2//Δ
         }
```

Δ indicates the mark a, partial message content marked in the push message indicates that the message content needs to be processed by the main processor, and partial message content not marked in the push message indicates that the message content does not need to be processed by the main processor.

The push message sent to the coprocessor is, for example, as follows:

```
         {
          "aps" : {//Δ
          "alert" : "message"
          "badge" : 9
          "sound" : "default" //Δ
          }
          "parm1" : "bar"//Δ
          "parm2" : 2//Δ
         }
```

Δ indicates the mark b, partial message content marked in the push message indicates that the message content needs to be processed by the coprocessor, and partial message content not marked in the push message indicates that the message content does not need to be processed by the coprocessor.

In the foregoing embodiment of this application, after the communication chip receives the push message, the coprocessor parses and routes the push message. When the coprocessor has all abilities declared to be used for the push message, the application A in the coprocessor may directly invoke the abilities of the coprocessor to process the push message. In the entire process, only the coprocessor needs to be woken up, and the push message can be processed without waking up the main processor. This can reduce a quantity of times that the main processor is woken up, reduce power consumption of the electronic device, and prolong standby duration of the electronic device.

With reference to the structure of the electronic device shown in FIG. 5, in still another embodiment of the push message processing method provided in this application, the main processor and the coprocessor may collaboratively process the push message. A difference from the foregoing embodiment lies in the following:

In the foregoing embodiment, if the coprocessor has only some abilities declared to be used for the push message, the coprocessor invokes the some abilities to process the push message, and the main processor invokes other abilities declared to be used for the push message to process the push message.

However, in this embodiment, if the coprocessor has only some abilities declared to be used for the push message, but the main processor has all abilities declared to be used for the push message, the main processor invokes the abilities declared to be used for the push message to process the push message.

If both the main processor and the coprocessor have only some abilities declared to be used for the push message, the coprocessor invokes some abilities declared to be used for the push message to process the push message, and the main processor invokes other abilities declared to be used for the push message to process the push message. Alternatively, if both the coprocessor and the main processor have only some abilities declared to be used for the push message, the main processor invokes some abilities declared to be used for the push message to process the push message, and the coprocessor invokes other abilities declared to be used for the push message to process the push message.

For example, it is assumed that the push message declares to use a text display ability, an audio playing ability, and a badge display ability. If the MCU has the foregoing three abilities, regardless of whether the AP has the foregoing three abilities, the MCU preferentially invokes the foregoing three abilities to process the push message. If the MCU does not have the foregoing three abilities, the AP invokes the foregoing three abilities to process the push message. If the MCU has the text display ability but the AP has the foregoing three abilities, the AP invokes the foregoing three abilities to process the push message. If the MCU has the text display ability and the audio playing ability, and the AP has the audio playing ability and the badge display ability, the MCU may invoke the text display ability and the audio playing ability to process the push message, and the AP invokes the badge display ability to process the push message; or the MCU invokes the text display ability to process the push message, and the AP invokes the audio playing ability and the badge display ability to process the push message.

Optionally, to ensure that the main processor and the coprocessor can collaboratively process all push messages, a union set of an ability set 1 of the main processor and an ability set 2 of the coprocessor may be a set of all abilities declared to be used for the push messages in the electronic device. There may be an intersection set between the ability set 2 of the coprocessor and the ability set 1 of the main processor, or there may be no intersection set between the ability set 2 of the coprocessor and the ability set 1 of the main processor.

For a specific implementation of this embodiment of this application, still refer to the procedure shown in FIG. 7. A difference mainly lies in the following:
In this embodiment of this application, step 701 may specifically include:
The message processing module may find, from the distribution routing table, the processor corresponding to each ability in the ability list. When the processor corresponding to each ability includes the coprocessor, it is determined that the target processor is the coprocessor. When the processor corresponding to each ability does not include the coprocessor, it is determined that the target processor is the main processor. When processors corresponding to some abilities include the coprocessor but the processor corresponding to each ability includes the main processor, it is determined that the target processor is the main processor. When processors corresponding to some abilities include the coprocessor, and processors corresponding to some abilities include the main processor, it is determined that the target processor is the main processor and the coprocessor.

In this embodiment, the coprocessor preferentially processes the push message, and the main processor independently processes the push message or the main processor and the coprocessor collaboratively process the push message only when the coprocessor does not have all abilities declared to be used for the push message, so that a quantity of times that the main processor is woken up can be reduced, power consumption of the electronic device can be reduced, and standby duration of the electronic device can be prolonged.

In the foregoing embodiment, an example in which the main processor and one coprocessor are disposed in the electronic device to process the push message is used. In another embodiment provided in this application, two or more coprocessors may be disposed in the electronic device to process the push message, and a specific quantity of coprocessors is not specifically limited in this embodiment of this application. In this case, the application A may be set in the main processor and the plurality of coprocessors, and a message processing module may be disposed in one of the coprocessors (referred to as a main coprocessor below), and the push message is routed to the application A in the target processor for processing via the message processing module. It may be understood that the target processor herein may be one or more processors. This is not limited in embodiments of this application. When the message processing module determines the target processor, a priority relationship between the processors may be: the main coprocessor (the coprocessor including the message processing module) > other coprocessors > the main processor.

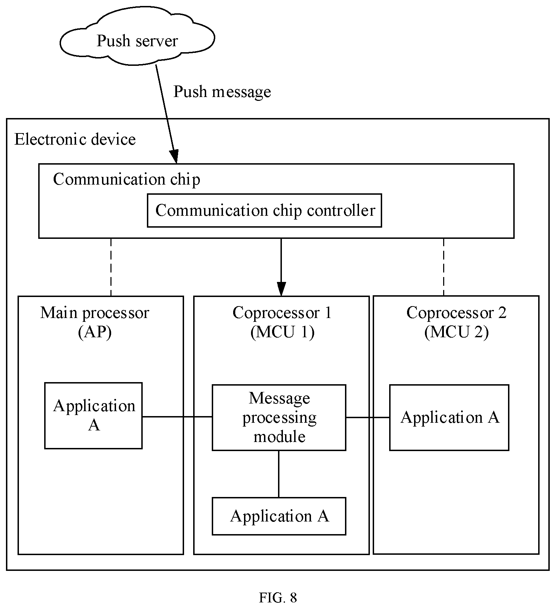

For example, in FIG. 8, three processors, namely, a main processor (for example, an AP), a coprocessor 1 (for example, an MCU 1), and a coprocessor 2 (for example, an MCU 2), are disposed in the electronic device to process a push message. The coprocessor 1 may correspond to the coprocessor in FIG. 5. Different from the structure of the electronic device shown in FIG. 5, in this embodiment of this application, a message processing module in the coprocessor 1 may route the push message to an application A in the coprocessor 1, an application A in the coprocessor 2, and/or an application A in the main processor. Optionally, in this embodiment, a priority of the processors for processing the push message may be: the coprocessor 1 > the coprocessor 2 > the main processor.

In an embodiment of the push message processing method provided in this application, if the main processor and the coprocessor do not collaboratively process the push message, the message processing module in the coprocessor 1 may preferentially route the push message to the application A in the coprocessor 1 for processing based on the foregoing priority, so that only the coprocessor 1 needs to be woken up, thereby reducing power consumption. When the coprocessor 1 cannot process the push message, the push message is routed to the coprocessor 2 or the main processor for processing. When both the coprocessor 2 and the main processor can process the push message, the push message is preferentially routed to the coprocessor 2 for processing, so that the coprocessor 2 with low power consumption is preferentially used to process the push message, thereby reducing power consumption for processing the push message.

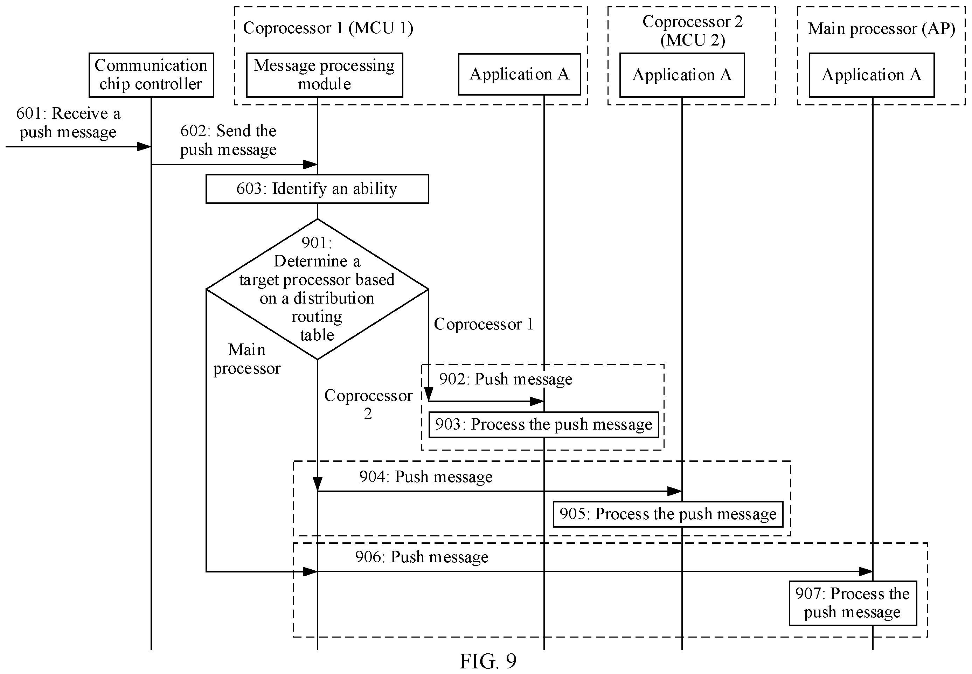

FIG. 9 is a schematic flowchart of a push message processing method according to an embodiment of this application based on the structure of the electronic device shown in FIG. 8. As shown in FIG. 9, a difference between the method and the method shown in FIG. 6 mainly lies in the following: Because the coprocessor 2 is added, in comparison with step 604 in FIG. 6, a branch in which the target processor is the coprocessor 2 is added in step 901 in this embodiment, so that steps 604 to 608 are replaced with the following steps 901 to 907.

Step 901: A message processing module determines, based on an ability list of a push message and a distribution routing table, a target processor for processing the push message. When the target processor is a coprocessor 1, step 902 is performed; when the target processor is a coprocessor 2, step 904 is performed; or when the target processor is a main processor, step 906 is performed.

Optionally, the message processing module may find, from the distribution routing table, a processor corresponding to each ability in the ability list. When the processor corresponding to each ability includes the coprocessor 1, it is determined that the target processor is the coprocessor 1. When a processor corresponding to at least one ability does not include the coprocessor 1, and the processor corresponding to each ability includes the coprocessor 2, it is determined that the target processor is the coprocessor 2. When processors corresponding to some abilities do not include the coprocessor 1 and the coprocessor 2, it is determined that the target processor is the main processor.

Step 902 and step 903: The message processing module sends the push message to an application A in the coprocessor 1, and the application A in the coprocessor 1 uses an ability declared to be used for the push message to process the push message. This branch procedure ends.

Step 904 and step 905: The message processing module sends the push message to an application A in the coprocessor 2, and the application A in the coprocessor 2 uses an ability declared to be used for the push message to process the push message. This branch procedure ends.

Optionally, to prevent the coprocessor 2 from being in a sleep state and failing to receive the push message, before the push message is sent, the coprocessor 1 may send a wake-up signal to the coprocessor 2. If the coprocessor 2 is in the sleep state, the coprocessor 2 is woken up by the wake-up signal. Then, the application A in the coprocessor 2 may receive the push message sent by the message processing module in the coprocessor 1.

Step 906 and step 907: The message processing module sends the push message to an application A in the main processor, and the application A in the main processor uses an ability declared to be used for the push message to process the push message. This branch procedure ends.

In the method, after the communication chip receives the push message, the message processing module of the coprocessor 1 parses and routes the push message. When the coprocessor 1 has all abilities declared to be used for the push message, the application A in the coprocessor 1 may directly use the abilities of the coprocessor to process the push message. When the coprocessor 1 does not have all the abilities declared to be used for the push message but the coprocessor 2 has all the abilities declared to be used for the push message, the push message is routed to the application A in the coprocessor 2 for processing. In the entire process, only the coprocessor needs to be woken up, and the push message can be processed without waking up the main processor. Therefore, a quantity of times that the main processor is woken up can be reduced, power consumption of the electronic device can be reduced, and standby duration of the electronic device can be prolonged.

In another embodiment of the push message processing method provided in this application, if the main processor and the coprocessor collaboratively process the push message, the message processing module in the coprocessor 1 may preferentially route the push message to the application A in the coprocessor 1 and/or the application A in the coprocessor 2 for processing based on the foregoing priority. When the coprocessor cannot process the push message, the push message is routed to the main processor for processing.

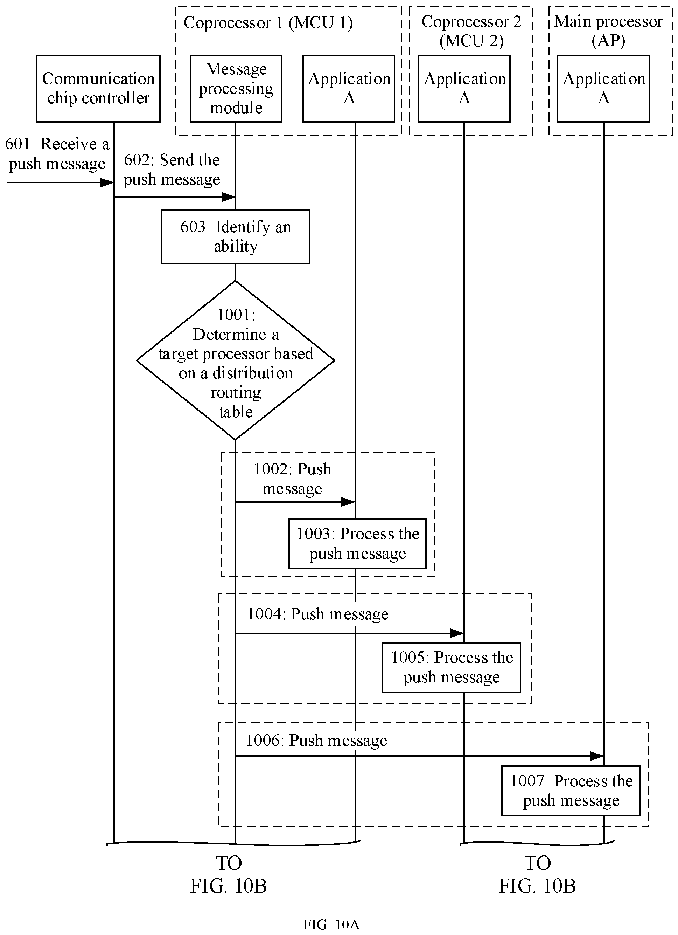

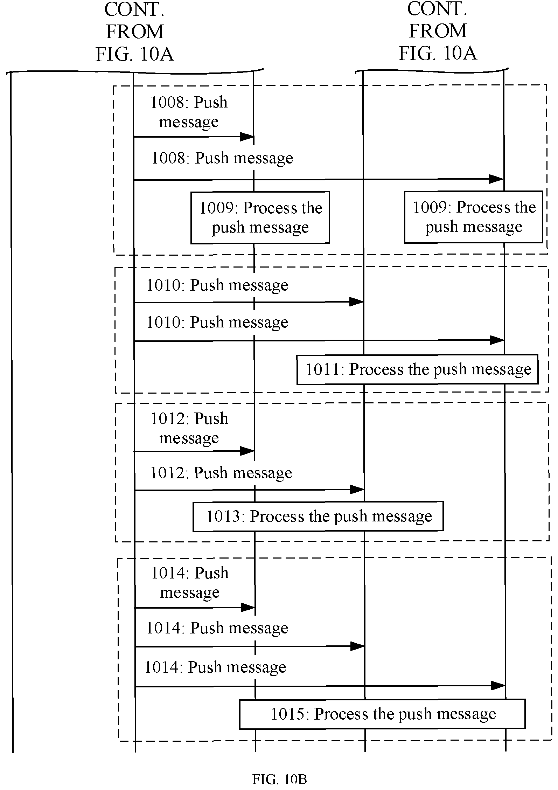

FIG. 10A and FIG. 10B are a schematic flowchart of a push message processing method according to an embodiment of this application based on the structure of the electronic device shown in FIG. 8. A difference from the embodiment shown in FIG. 7 mainly lies in the following: Because the coprocessor 2 is added, in comparison with step 701 in FIG. 7, in step 1001 in this embodiment, a branch in which the target processor is the coprocessor 2 and a processor for collaborative processing of the push message includes the coprocessor 2 is added. Therefore, steps 701 to 707 are replaced with the following steps 1001 to 1015.

Specifically, in step 1001, when a message processing module of a coprocessor 1 determines, based on an ability list of a push message and a distribution routing table, a target processor for processing the push message, the determined target processor may be: the coprocessor 1; a coprocessor 2; a main processor; the coprocessor 1 and the coprocessor 2; the coprocessor 2 and the main processor; the coprocessor 1 and the main processor; the coprocessor 1, the coprocessor 2, and the main processor, or the like. Therefore, in a subsequent step, the message processing module of the coprocessor 1 may route the push message to an application A in the target processor, and the application A in the target processor processes the push message.

For a specific implementation of this embodiment, refer to a related embodiment in which the electronic device includes the main processor and the coprocessor, and the main processor and the coprocessor may collaboratively process the push message. Details are not described herein again.

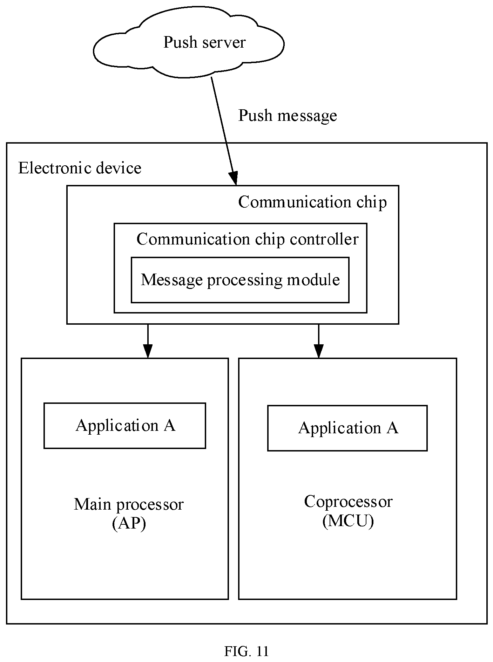

In another embodiment provided in this application, the message processing module in the foregoing embodiment may alternatively be disposed in a communication chip controller of the communication chip. For example, as shown in FIG. 11, an example in which the message processing module in the structure of the electronic device shown in FIG. 5 is disposed in a communication chip controller of a communication chip is used. In this case, for an implementation of the push message processing method in this embodiment of this application, refer to the foregoing embodiment. Details are not described herein again.

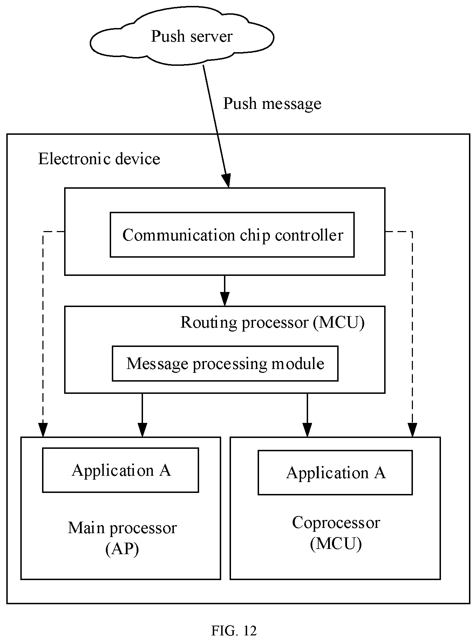

In another embodiment provided in this application, a routing processor may be connected between the communication chip and each processor in the foregoing embodiment, and the message processing module may be disposed in the routing processor. For example, as shown in FIG. 12, an example in which the message processing module in the structure of the electronic device shown in FIG. 5 is disposed in a routing processor is used. In this case, for an implementation of the push message processing method in this embodiment of this application, refer to the foregoing embodiment. Details are not described herein again. Optionally, the routing processor may be implemented by using a low-power processor like an MCU.

In another embodiment of the push message processing method provided in this application, a push message sent by a push server to the electronic device may carry identification information. The identification information may be an ability identifier indicating an ability required by the push message, or an identifier indicating a target processor for processing the push message, which is referred to as a target processor identifier for short below.

The following provides examples for description.

In some embodiments, the push message sent by the push server to the electronic device may carry an ability identifier, and the ability identifier indicates an ability required by the push message. In this case, the message processing module in the foregoing embodiment does not need to identify, based on a keyword in the push message, the ability declared to be used for the push message, but directly obtains the ability identifier from the push message, to obtain the ability declared to be used for the push message.

The ability required by the push message may correspond to the hardware ability or the software running ability of the foregoing processor. Details are not described herein again.

In some embodiments, the push server may also identify, by using the foregoing method such as searching for a keyword, the ability declared to be used for the push message, and set an identifier of the ability in the push message. For a specific implementation, refer to the foregoing corresponding description. Details are not described herein again.

A location at which the ability identifier is set in the push message is not limited in this embodiment of this application, provided that the ability identifier is predefined between the push server and the electronic device, so that the electronic device can obtain the ability identifier from the push message.

In some embodiments, the ability identifier may be set in the push message as a parameter in the push message. For example, the following push message is used as an example:

```
         {
          "aps" : {
          "alert" : "message"
          "badge" : 9
          "sound" : "default"
         "abilityID" : "1,3"
          },
          "parm1" : "bar"
          "parm2" : 2
         }
```

1 and 3 corresponding to abilityID are ability identifiers, for example, may respectively identify a "display" ability and a "speaker" ability.

In some embodiments, the push message sent by the push server to the electronic device may carry the target processor identifier. In this case, the message processing module in the foregoing embodiment does not need to identify the ability declared to be used for the push message, and does not need to determine a target server based on the distribution routing table, provided that the target processor identifier is obtained from the push message, and the target processor is determined based on the target processor identifier. A location at which the target processor identifier is set in the push message is not limited in this embodiment of this application, provided that the target processor identifier is predefined between the push server and the electronic device, so that the electronic device can obtain the ability identifier from the push message.

In some embodiments, the target processor identifier may be set in the push message as a parameter in the push message. For example, the following push message is used as an example:

```
         {
          "aps" : {
          "alert" : "message"
          "badge" : 9
          "sound" : "default"
         "CPUID" : "1 "
          },
          "parm1" : "bar"
          "parm2" : 2
         }
```

1 corresponding to the CPUID is the target processor identifier. For example, when the electronic device is implemented by using the structure shown in FIG. 5, "1" may indicate that the coprocessor in FIG. 5 is the target processor.

In some embodiments, if the target processor identifier carried in the push message sent by the push server to the electronic device indicates at least two target processors, the push server may perform processing such as division and/or identification on message content in the push message, so that the electronic device can learn of message content that needs to be processed by each target processor.

In an example, the push message content may be divided based on a push message that needs to be processed by each target processor, and a target server corresponding to each part of the message content is identified. Correspondingly, the message processing module in the electronic device may split the push message into sub-messages, and separately send the sub-messages to corresponding target processors for processing. Alternatively, after the message processing module in the electronic device sends the push message to an application A in each target processor, the application A in each target processor may obtain, from the push message, message content that needs to be processed by the application A and process the message content.

The following push message is used as an example:

```
         {
          "aps" : {
          "alert" : "message"
          "badge" : 9
          "sound" : "default"
          },
          "parm1" : "bar"
          "parm2" : 2
         }
```

It is assumed that the coprocessor supports only the "speaker" ability, and the main processor supports the "display" ability. In this case, the push message content may be split and represented, to obtain the following push message.

```
         {
          "aps" : {
          "sound" : "default"
         "CPUID" : "1 "
          },
          "parm1" : "bar"
          "parm2" : 2
         {////Boundary between two parts of message content
          "aps" : {
          "alert" : "message"
          "badge" : 9
         "CPUID" : "2 "
          },
          "parm1" : "bar"
          "parm2" : 2
```

The former part of the message content has an ID "1" of the coprocessor and is executed by the coprocessor, and the latter part of the message content has an ID "2" of the main processor and is executed by the main processor.

In another example, the push message may be correspondingly marked based on push message content that needs to be processed by each target processor. Correspondingly, the message processing module in the electronic device may split the push message into sub-messages based on different marks, and separately send the sub-messages to corresponding target processors for processing. Alternatively, after the message processing module in the electronic device sends the push message to the application A in the target processor, the application A in each target processor may obtain, from the push message based on a mark corresponding to the application A, message content that needs to be processed by the application A, and process the message content.

Continuing with the foregoing example of the push message, a marked push message is shown as follows:

```
         {
          "aps" : {
          "alert" : "message" //Δ
          "badge" : 9 //Δ
          "sound" : "default" //√
          },
          "parm1" : "bar"
          "parm2" : 2
         }
```

√ indicates a mark 1, and is used to mark push message content that needs to be processed by the coprocessor. Δ indicates a mark 2, and is used to mark push message content that needs to be processed by the main processor. An unmarked part may indicate that the two processors need to perform processing.

In some embodiments, to enable the push server to obtain information about the processor disposed in the electronic device and information about an ability of the processor, so as to accurately indicate the target processor to the electronic device, the electronic device may send the information to the push server. Specifically, for example, the foregoing information may be sent in a registration process shown in FIG. 3.

Information such as a brand and a model of the electronic device may also be associated with the information about the processor disposed in the electronic device and the information about the ability of the processor. Therefore, in some embodiments, the electronic device may not send the information about the processor and the information about the ability of the processor to the push server. Instead, device information associated with the foregoing information, such as the brand and the model of the electronic device, is sent to the push server, so that the push server determines, based on the device information, the information about the processor disposed in the electronic device and the information about the ability of the processor.

In some embodiments, a method for determining, by the push server, the target server of the push message based on the information about the processor disposed in the electronic device and the information about the ability of the processor may be specifically implemented by using the foregoing method for determining the target server of the push message in the electronic device.

An embodiment of this application further provides a computer-readable storage medium. The computer-readable storage medium stores a computer program. When the computer program is run on a computer, the computer is enabled to perform the method provided in embodiments of this application.

An embodiment of this application further provides a computer program product. The computer program product includes a computer program. When the computer program is run on a computer, the computer is enabled to perform the method provided in embodiments of this application.

In embodiments of this application, "at least one" means one or more, and "a plurality of" means two or more. "And/or" describes an association relationship for describing associated objects and represents that three relationships may exist. For example, A and/or B may represent the following three cases: Only A exists, both A and B exist, and only B exists. A and B may be singular or plural. The character "/" generally indicates an "or" relationship between the associated objects. "At least one of the following items" and similar expressions refer to any combination of these items, including a single item or any combination of a plurality of items. For example, at least one of a, b, or c may indicate a, b, c, a and b, a and c, b and c, or a, b, and c, where a, b, and c may be singular or plural.

A person of ordinary skill in the art may be aware that the units and algorithm steps described in embodiments disclosed in this specification can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the function may be stored in a computer-readable storage medium. Based on such understanding, a part of the·technical solutions of· this application that essentially makes contributions, or a part of the technical solutions, may be embodied in form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementations of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A push message processing method, applied to an electronic device, wherein the electronic device comprises a main processor and a coprocessor, and the method comprises:
receiving, by the coprocessor, a push message; and
processing, by the coprocessor, the push message; or sending, by the coprocessor, the push message to the main processor, so that the main processor processes the push message.

2. The method according to claim 1, further comprising:
determining, by the coprocessor, a target processor from the main processor and the coprocessor based on the push message.

3. The method according to claim 2, wherein the push message comprises a first identifier, and determining, by the coprocessor, the target processor from the main processor and the coprocessor based on the push message comprises:
determining, by the coprocessor, the target processor based on the first identifier.

4. The method according to claim 3, wherein determining, by the coprocessor, the target processor based on the first identifier comprises:
determining, by the coprocessor based on the first identifier, an ability related to the push message; and
determining the target processor based on the ability related to the push.

5. The method according to claim 2, wherein determining, by the coprocessor, the target processor from the main processor and the coprocessor based on the push message comprises:
parsing, by the coprocessor, the push message to determine an ability related to the push message; and
determining the target processor based on the ability related to the push.

6. The method according to claim 5, wherein parsing, by the coprocessor, the push message to determine the ability related to the push message comprises:
parsing, by the coprocessor, the push message to determine hardware related to the push message; and
determining the target processor based on the ability related to the push comprises:
determining the target processor based on the hardware related to the push message.

7. The method according to claim 6, wherein determining the target processor based on the hardware related to the push message comprises:
determining the target processor based on whether hardware connected to the target processor comprises the hardware related to the push message.

8. The method according to claim 5, wherein parsing, by the coprocessor, the push message to determine the ability related to the push message comprises:
determining, by the coprocessor based on a keyword comprised in the push message, the ability related to the push message.

9. The method according to any one of claims 5 to 8, further comprising:
storing, in the coprocessor, a mapping relationship between the ability and the processor.

10. The method according to any one of claims 1 to 9, wherein the main processor is an AP, and/or the coprocessor is an MCU.

11. A push message processing method, applied to an electronic device, wherein the electronic device comprises a main processor and a coprocessor, and the method comprises:
receiving a push message; and
sending the push message to the coprocessor, so that the coprocessor processes the push message; or sending the push message to the main processor, so that the main processor processes the push message.

12. The method according to claim 11, further comprising:
determining a target processor from the main processor and the coprocessor based on the push message.

13. The method according to claim 12, wherein the push message comprises a first identifier, and determining the target processor from the main processor and the coprocessor based on the push message comprises:
determining the target processor based on the first identifier.

14. The method according to claim 13, wherein determining the target processor based on the first identifier comprises:
determining, based on the first identifier, an ability related to the push message; and
determining the target processor based on the ability related to the push.

15. The method according to claim 14, wherein determining, based on the first identifier, the ability related to the push message comprises:
determining, based on the first identifier, hardware related to the push message.

16. The method according to claim 15, wherein determining the target processor based on the ability related to the push comprises:
determining the target processor based on whether hardware connected to the target processor comprises the hardware related to the push message.

17. The method according to any one of claims 11 to 16, wherein the main processor is an AP, and/or the coprocessor is an MCU.

18. An electronic device, comprising:
a main processor, a coprocessor, and a memory, wherein one or more computer programs are stored in the memory, and the one or more computer programs comprise instructions; and when the instructions are executed by the coprocessor, the electronic device is enabled to perform the method according to any one of claims 1 to 10.

19. An electronic device, comprising:
a main processor, a coprocessor, a routing processor, and a memory, wherein one or more computer programs are stored in the memory, and the one or more computer programs comprise instructions; and when the instructions are executed by the routing processor, the electronic device is enabled to perform the method according to any one of claims 11 to 17.

20. A computer-readable storage medium, wherein the computer-readable storage medium stores a computer program; and when the computer program is run on a computer, the computer is enabled to perform the method according to any one of claims 1 to 17.

21. A chip system, wherein the chip system comprises a processor, the processor is coupled to a memory, and the processor executes a computer program stored in the memory, to implement the method according to any one of claims 1 to 17.
